# EUROPÄISCHE PATENTSCHRIFT

(11) **EP 3 103 928 B1**
(45) Veröffentlichungstag und Bekanntmachung des Hinweises auf die Patenterteilung: **15.12.2021**
(21) Anmeldenummer: 16169548.1
(22) Anmeldetag: 13.05.2016
(51) Int. Cl.: E02F 9/02, E02F 9/12

(54) **BAUFAHRZEUG MIT VERKIPPBAREM FAHRGESTELL**
CONSTRUCTION VEHICLE WITH TIPPING CHASSIS
VEHICULE DE CHANTIER DOTE D'UN CHASSIS BASCULANT

(30) Priorität: 09.06.2015 DE 102015109112
(43) Veröffentlichungstag der Anmeldung: 14.12.2016
(73) Patentinhaber: Wacker Neuson Linz GmbH, 4063 Hörsching (AT)
(72) Erfinder: Erlinger, Thomas, 4175 Herzogsdorf (AT)
(74) Vertreter: Müller Hoffmann & Partner

(56) Entgegenhaltungen:
- WO-A1-2010/028649
- CN-B- 102 367 058
- DE-A1- 1 949 782
- DE-A1- 3 230 659
- DE-U1-202004 004 934
- JP-A- H0 880 879
- JP-A- H11 208 538

## Beschreibung

Die Erfindung betrifft ein Baufahrzeug, zum Beispiel ein Baggerfahrzeug.

Es sind Baufahrzeuge, insbesondere Baggerfahrzeuge, bekannt, bei denen ein Aufbau, z.B. ein Oberwagen auf einem Drehkranz um eine Hochachse drehbar gelagert ist. Der Oberwagen weist üblicherweise einen Werkzeugmanipulator für beliebige Werkzeuge wie zum Beispiel Schaufeln, Meißel etc. auf. Die Hochachse kann bezüglich einer Standfläche des Baufahrzeugs verkippt werden. Dazu wird der Drehkranz von einem Fahrwerk mit zwei Kettenlaufwerken gehalten und kann relativ zu den Kettenlaufwerken verkippt werden.

Dadurch, dass bei derartigen Baufahrzeugen eine Kippverstellung des Oberwagens relativ zu dem Fahrgestell möglich ist, kann mit diesen Baufahrzeugen beispielsweise auch in abschüssigem Gelände senkrecht nach unten gegraben werden, was gegenüber anderen Baufahrzeugen den Vorteil mit sich bringt, dass nur geringere Mengen an Aushub ausgegraben werden müssen, wodurch Zeit und Material gespart werden können. Zudem erhöht sich die Standsicherheit des Baufahrzeuges auf einem Hang. Darüber hinaus befindet sich der Baufahrzeugführer während des Arbeitens stets in seiner gewöhnten horizontalen Sitzposition, was auch die Arbeitssicherheit wesentlich erhöht.

Aus der AT 11 088 U1 ist ein derartiges Baufahrzeug mit einem einen Drehschemel tragenden Fahrwerk bekannt, wobei auf dem Fahrwerk ein Aufbau bzw. Oberwagen drehbar gelagert ist und wobei der Drehschemel zur Kippverstellung des Aufbaus gegenüber dem Fahrwerk um eine Achse am Fahrwerk schwenkverstellbar gelagert ist.

Aus der WO 2010/028649 A1 ist eine andere Baumaschine bekannt, die jedoch kein Fahrwerk aufweist, sondern einzelne Arme, die individuell bewegt und an das jeweilige Gelände angepasst werden können, um ein vertikales Ausrichten der Hochachse des Oberwagens zu ermöglichen.

In der JP-A-08080879 wird ein Baggerfahrzeug beschrieben, mit zwei Fahrgestellen, die relativ zu einem Drehkranz um jeweils eine sich quer zur Fahrtrichtung erstreckende Schwenkachse verschwenkbar sind. Die Fahrgestelle können damit in Längsrichtung verschwenkt werden, um auch bei einer Stellung des Baggers in Bergaufrichtung den Drehkranz und damit den Oberwagen waagrecht zu halten.

Von besonderer Wichtigkeit bei derartigen Baufahrzeugen ist es, dass sie auch im steilen Gelände sicher stehen und insbesondere eine Kippgefahr bei einem Verschwenken der Hochachse minimiert ist.

Der Erfindung liegt die Aufgabe zu Grunde, ein Baufahrzeug mit einem relativ zu seinem Aufbau beziehungsweise dem Oberwagen verkippbaren Fahrgestell anzugeben, das eine weitere Verbesserung der Standsicherheit ermöglicht.

Die Aufgabe wird erfindungsgemäß durch ein Baufahrzeug mit den Merkmalen von Anspruch 1 gelöst. Vorteilhafte Ausgestaltungen sind in den abhängigen Ansprüchen angegeben.

Ein Baufahrzeug weist einen Drehkranz, auf dem ein Aufbau beziehungsweise ein Oberwagen drehbar gelagert ist, und ein den Drehkranz tragendes Fahrwerk auf. Das Fahrwerk weist einerseits ein mit dem Drehkranz starr verbundenes oberes Fahrgestell mit einem oberen Laufwerk und andererseits ein relativ zu dem oberen Fahrgestell verschwenkbar gelagertes unteres Fahrgestell mit einem unteren Laufwerk auf. Weiterhin ist eine Schwenkvorrichtung vorgesehen, zum Verschwenken des unteren Fahrgestells relativ zu dem oberen Fahrgestell.

Die Bezeichnungen "unteres Fahrgestell" und "oberes Fahrgestell" dienen an dieser Stelle in erster Linie der Differenzierung der beiden Fahrgestellkomponenten. Die Begriffe wurden gewählt, um zu verdeutlichen, welches Fahrgestell mit dem Drehkranz starr verbunden ist (das obere Fahrgestell) und welches Fahrgestell relativ dazu verschwenkt werden kann, insbesondere in Bezug auf eine Horizontalebene nach unten verschwenkt werden kann (das untere Fahrgestell). Genauso gut hätte auch eine andere Bezeichnung gewählt werden können wie zum Beispiel "erstes Fahrgestell" und "zweites Fahrgestell", was jedoch für die Veranschaulichung der Erfindung weniger hilfreich gewesen wäre.

Das Fahrwerk besteht somit aus einem geteilten Fahrwerksrahmen, der die beiden Fahrgestelle aufweist.

Das obere Fahrgestell ist mit dem Drehkranz starr verbunden und trägt daher den Drehkranz. Die starre Verbindung bedeutet insbesondere, dass der Drehkranz nicht relativ zu dem oberen Fahrgestell verschwenkbar beziehungsweise verkippbar ist. Der Drehkranz definiert die Hochachse, um die der Aufbau beziehungsweise der Oberwagen verdreht werden kann. Daher muss durch entsprechende Ausrichtung des oberen Fahrgestells erreicht werden, dass sich die Hochachse in vertikaler Richtung erstreckt. Starr bedeutet somit insbesondere auch, dass die Relativstellung zwischen dem Drehkranz und dem oberen Fahrgestell nicht veränderbar sein soll.

Bei den Laufwerken kann es sich z.B. jeweils um ein Kettenlaufwerk oder um ein Räderlaufwerk handeln.

Mithilfe der Schwenkvorrichtung ist es möglich, die relative Schwenkstellung zwischen dem unteren Fahrgestell und dem oberen Fahrgestell einzustellen. Insbesondere ist ein Verschwenken möglich zwischen einer Horizontalstellung, in der die beiden Laufwerke in einer gemeinsamen Horizontalebene parallel zu einer Drehebene des Oberwagens und damit senkrecht zur Hochachse des Drehkranzes liegen, und einer beliebigen Schrägstellung, die insbesondere am Berg sinnvoll ist. Der Schwenkwinkel kann zum Beispiel zwischen 0° (Horizontalstellung) und 60° liegen.

Durch das alleinige Verschwenken des unteren Fahrgestells, während das obere Fahrgestell starr mit dem Drehkranz verbunden ist, kann unter anderem auch erreicht werden, dass die talseitige Kettenführung, also das untere Laufwerk nahezu parallel zum Untergrund steht. Gerade das untere Laufwerk ist besonders beansprucht, was zu einem häufigen Kettenausfall bei hoher Belastung führen kann. Durch die parallele Ausrichtung des unteren Laufwerks zum Untergrund wird die Belastung jedoch verringert, so dass die Lebensdauer erhöht werden kann.

Insgesamt kann durch die Zweiteilung des Fahrwerks eine verbesserte Standsicherheit vor allem im abschüssigen Gelände erreicht werden.

Zwischen dem oberen Fahrgestell und dem unteren Fahrgestell kann wenigstens eine Schwenkachse ausgebildet sein, um die das untere Fahrgestell relativ zu dem oberen Fahrgestell verschwenkbar ist. Dabei kann die Schwenkvorrichtung eine hydraulische und/oder elektrische Stelleinrichtung aufweisen. Die Stelleinrichtung kann insbesondere längenverstellbar sein und so an einem bestimmten Punkt den Abstand zwischen dem unteren Fahrgestell und dem oberen Fahrgestell verändern. Dadurch ist das Verschwenken um die Schwenkachse möglich, so dass eine Winkelverstellung zwischen den beiden Fahrgestellen erreicht werden kann. Falls sinnvoll, können auch mehrere Schwenkachsen vorgesehen sein, um die das untere Fahrgestell relativ zu dem oberen Fahrgestell verschwenkbar ist.

Als Stelleinrichtung eignet sich zum Beispiel ein Differentialzylinder, eine hydraulische Kolben-Zylinder-Einheit, eine elektrisch oder hydraulisch betriebene Spindeleinheit oder auch eine andere, an sich bekannte Linearverstellung.

An dem unteren Fahrgestell kann ein Planierschild befestigt sein. Mithilfe des Planierschilds ist es möglich, den Fahrweg vor dem Baufahrzeug frei zu räumen, was insbesondere in unwegsamem Gelände von Vorteil ist. Dadurch, dass das Planierschild zusammen mit dem unteren Fahrgestell verschwenkt wird, passt sich die Lage des Planierschilds auch gegebenenfalls an Schrägstellungen im Gelände automatisch an.

Bei einer Ausführungsform kann das untere Laufwerk relativ zu der Schwenkachse linear bewegbar sein. Das bedeutet, dass das untere Laufwerk von der Schwenkachse weg und zur Schwenkachse hin verschoben werden kann. Somit ist zusätzlich zu der eigentlichen Verschwenkbewegung des unteren Laufwerks (zusammen mit dem unteren Fahrgestell) um die Schwenkachse auch noch eine Radialbewegung linear relativ zur Schwenkachse möglich. Damit kann der Abstand des unteren Laufwerks zur Schwenkachse und damit zu dem relativ zu der Schwenkachse nicht beweglichen oberen Fahrgestell verändert werden. Durch das Vergrößern des Abstands kann auch die Standfläche des Baufahrzeugs auf den beiden Laufwerken je nach Einsatzzweck vergrößert oder verkleinert werden.

Insbesondere kann das untere Fahrgestell eine Teleskopiereinrichtung aufweisen, die derart ausgebildet ist, um den Abstand zwischen dem unteren Laufwerk und der Schwenkachse zu verändern. Die Teleskopiereinrichtung stellt somit Mittel bereit, mit der der Abstand je nach Wunsch des Fahrers des Baufahrzeugs eingestellt werden kann. Ebenso ist es aber auch möglich, dass die Teleskopiereinrichtung den Abstand in Abhängigkeit von der Winkel- beziehungsweise Schwenkstellung des unteren Laufwerks und damit des unteren Fahrgestells relativ zu dem oberen Fahrgestell automatisch verändert. Zum Beispiel kann der Abstand des unteren Laufwerks zur Schwenkachse mit zunehmender Verschwenkung des unteren Fahrgestells vergrößert werden. Auf diese Weise kann einer Verkleinerung der wirksamen Standfläche (auf eine Horizontalebene projizierte Standfläche) entgegen gewirkt und diese vielmehr konstant gehalten oder gar vergrößert werden.

Ohne eine derartige Teleskopierung, das heißt Vergrößerung der Standfläche, würde die wirksame Standfläche (projizierte Standfläche) mit zunehmender Verschwenkung des unteren Fahrgestells kleiner werden.

Zwischen dem oberen Fahrgestell und dem unteren Fahrgestell kann eine Koppeleinrichtung vorgesehen sein, zum automatischen Verändern des Abstands zwischen dem unteren Laufwerk und der Schwenkachse, wenn das untere Fahrgestell relativ zu dem oberen Fahrgestell verschwenkt wird. Die Koppeleinrichtung bewirkt somit zusammen mit den beiden Fahrgestellen ein Koppelgetriebe. Je mehr das untere Fahrgestell relativ zu dem oberen Fahrgestell verschwenkt wird, desto größer kann der Abstand eingestellt werden. In diesem Fall weist die Teleskopiereinrichtung nicht nur Mittel zum entsprechend stabilen linearen Verlagern des unteren Fahrgestells relativ zur Schwenkachse auf, sondern auch die Koppeleinrichtung.

Die Koppeleinrichtung kann eine Koppelstange aufweisen, die mit ihrem einen Ende an dem oberen Fahrgestell und mit ihrem anderen Ende an dem unteren Fahrgestell schwenkbar befestigt ist. Dadurch zwingt die Koppelstange dem unteren Fahrgestell eine Bewegung auf, wenn das untere Fahrgestell relativ zu dem oberen Fahrgestell verschwenkt wird. Dazu ist es jedoch erforderlich, dass das untere Fahrgestell in geeigneter Weise ausgebildet ist und insbesondere seine lineare Länge, das heißt den Abstand zwischen dem unteren Laufwerk und der Schwenkachse verändern kann.

Die Teleskopiereinrichtung kann ein mit der Schwenkachse gekoppeltes und um die Schwenkachse verschwenkbares oberes Teleskopelement sowie ein mit dem unteren Laufwerk starr gekoppeltes unteres Teleskopelement aufweisen, wobei die Teleskopelemente ineinander geführt und relativ zueinander linear bewegbar sind. Auch hier gilt bei der Wahl der Begriffe "unteres Teleskopelement" und "oberes Teleskopelement" das oben Gesagte, wonach diese Begriffe lediglich zur besseren Unterscheidung und Verständlichkeit gewählt wurden.

Die beiden Teleskopelemente können demnach - in Anlehnung an ein Teleskop - ineinander geführt sein und sich in Längsrichtung linear erstrecken, wobei die lineare Relativposition veränderbar ist.

Je nach Ausbildung ist es möglich, dass ein Teleskopieren, das heißt ein Verändern des Abstands des unteren Laufwerks zur Schwenkachse und damit ein Ändern der radialen Länge des unteren Fahrgestells, möglich ist, ohne dass die beiden Fahrgestelle zueinander verschwenkt werden müssen. Somit kann auch in der Horizontalstellung, in der das untere Fahrgestell nicht verschwenkt ist, eine Vergrößerung des Abstands herbeigeführt werden, um die durch den Abstand der beiden Laufwerke definierte Standfläche zu vergrößern.

Sofern die oben angegebene Koppelstange vorhanden ist, kann das andere Ende der Koppelstange an dem unteren Teleskopelement schwenkbar befestigt sein, während das eine Ende an dem oberen Fahrgestell schwenkbar befestigt ist.

Dadurch wird bei einem Verschwenken des unteren Fahrgestells erreicht, dass das untere Teleskopelement relativ zu dem oberen Teleskopelement ausgefahren wird und der Abstand zur Schwenkachse vergrößert wird.

Die Teleskopiereinrichtung kann eine Teleskop-Stelleinrichtung zum Verändern der Relativstellung der beiden Teleskopelemente zueinander aufweisen. Bei der Teleskop-Stelleinrichtung kann es sich - ähnlich wie bei der oben angegebenen elektrischen Stelleinrichtung der Schwenkvorrichtung - um eine hydraulische Kolben-Zylinder-Einheit oder um einen elektrisch betriebenen Linearantrieb, zum Beispiel einen Spindelantrieb etc. handeln.

Die Teleskop-Stelleinrichtung kann im Inneren von wenigstens einem der Teleskopelemente angeordnet sein. In diesem Fall dient dieses Teleskopelement (oder auch beide Teleskopelemente) dem Schutz der Teleskop-Stelleinrichtung. Zum Beispiel kann ein Hydraulikzylinder geschützt in einem durch die beiden Teleskopelemente gebildeten Holm angeordnet sein.

Zwischen dem unteren Fahrgestell und dem oberen Fahrgestell kann ein Anschlag vorgesehen sein, zum Definieren eines waagerechten Betriebszustandes, in dem die Fahrgestelle eine Relativstellung einnehmen, bei dem die Laufwerke in einer gemeinsamen Horizontalebene stehen. Durch den Anschlag wird somit eine Endstellung definiert, nämlich die Horizontalstellung, die als Ausgangszustand für andere Stellungen dient, in denen das untere Fahrgestell verschwenkt ist. Der Anschlag kann zum Beispiel durch eine Holmquerverbindung gebildet sein, die auch zur Stabilisierung der Struktur des gesamten Fahrwerks bzw. des unteren Fahrgestells dient. In analoger Weise kann auch ein weiterer Anschlag vorgesehen sein, der die Extremstellung, das heißt die Schwenkstellung des unteren Fahrgestells mit maximalem Winkel begrenzt.

Diese und weitere Vorteile und Merkmale der Erfindung werden nachfolgend anhand von Beispielen unter Zuhilfenahme der begleitenden Figuren näher erläutert. Es zeigen:
- Figur 1: ein Baufahrzeug in Rückansicht;
- Figur 2: eine andere Ausführungsform des Baufahrzeugs mit einer Teleskopiereinrichtung;
- Figur 3: den Unterbau eines Baufahrzeugs in Perspektivansicht;
- Figur 4: den Aufbau von Figur 3 in Rückansicht;
- Figur 5: das Baufahrzeug von Figur 3 mit verschwenktem unteren Fahrgestell;
- Figur 6: das Baufahrzeug von Figur 5 in Rückansicht;
- Figur 7: einen Schnitt durch den unteren Teil eines Baufahrzeugs;
- Figur 8: den unteren Teil eines Baufahrzeugs in Seitenansicht;
- Figur 9: einen Schnitt entlang der Linie A-A in Figur 8.

In der nachfolgenden Figurenbeschreibung werden gleiche oder funktionsgleiche Bauelemente jeweils mit gleichen Bezugszeichen gekennzeichnet.

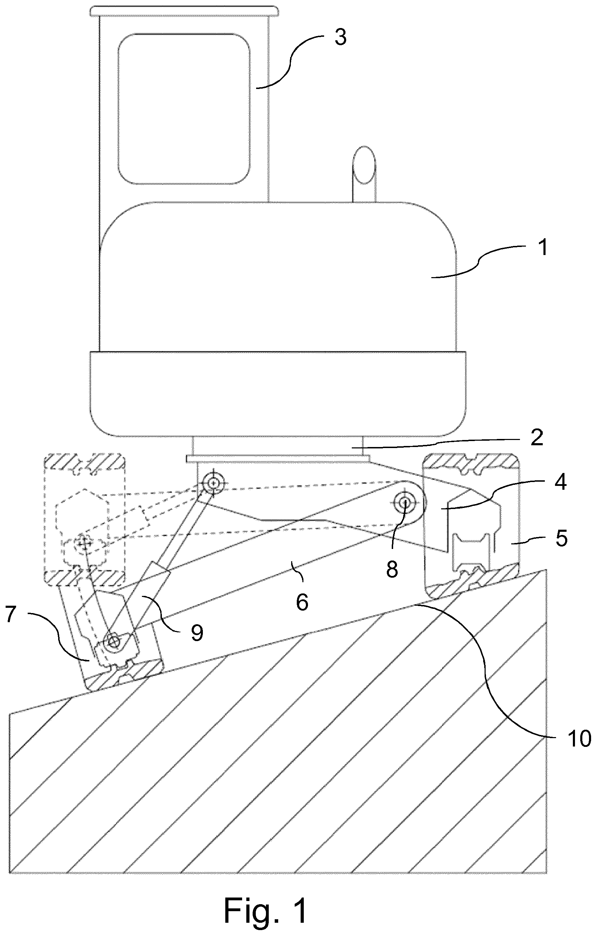

Figur 1 zeigt eine erste Ausführungsform eines als Baufahrzeug dienenden Baggers in Rückansicht.

Der Bagger weist einen durch einen Oberwagen 1 gebildeten Aufbau auf, der auf einem Drehkranz 2 in bekannter Weise drehbar gelagert ist. An dem Oberwagen 1 ist neben einer Fahrerkabine 3 ein nicht dargestellter Werkzeugmanipulator für beliebige Werkzeuge, zum Beispiel Schaufeln, Meißel und dergleichen, vorgesehen.

Der Drehkranz 2 ist starr mit einem oberen Fahrgestell 4 verbunden und wird von diesem getragen. Das obere Fahrgestell 4 weist ein oberes Laufwerk 5 auf, im vorliegenden Fall ein Kettenlaufwerk, das ebenfalls in bekannter Weise aufgebaut sein kann. Weiterhin ist ein unteres Fahrgestell 6 vorgesehen, an dessen Ende ein unteres Laufwerk 7, zum Beispiel ebenfalls ein Kettenlaufwerk, angeordnet ist.

Insoweit bilden der Drehkranz 2 und das obere Fahrgestell 4 eine bauliche Einheit. Insbesondere ist die Winkelstellung des Drehkranzes 2 relativ zu dem oberen Fahrgestell 4 nicht veränderbar.

Das untere Fahrgestell 6 ist relativ zu dem oberen Fahrgestell 4 um eine Schwenkachse 8 verschwenkbar. Die Schwenkachse 8 wird von dem oberen Fahrgestell 4 gehalten. Sie kann insbesondere zwischen der sich in Fahrtrichtung erstreckenden Längsachse des oberen Laufwerks 5 und einer sich durch das Zentrum des Drehkranzes 2 erstreckenden Längsachse angeordnet sein, wie auch aus Figur 1 ersichtlich.

Die Schwenkstellung des unteren Fahrgestells 6 relativ zu dem oberen Fahrgestell 4 wird mit Hilfe einer Stelleinrichtung 9 gehalten bzw. verändert, die zusammen mit der Schwenkachse 8 eine Schwenkvorrichtung bildet. Bei der Stelleinrichtung 9 handelt es sich im gezeigten Beispiel um eine Kolben-Zylinder-Einheit, mit deren Hilfe die relative Schwenkstellung hydraulisch eingestellt werden kann.

Die Stelleinrichtung 9 kann insbesondere mit ihrem einen Ende am unteren Fahrgestell 6 im Bereich des unteren Laufwerks 7 und mit ihrem anderen Ende am oberen Fahrgestell 4 im Bereich des Drehkranzes 2 angelenkt sein. Dabei kann die Befestigung der Stelleinrichtung 9 am unteren Fahrgestell 6 in einem Bereich liegen, der von der Kette des unteren Laufwerks 7 umschlossen ist, wie in Figur 1 erkennbar. Die Befestigung des anderen Endes der Stelleinrichtung 9 im Bereich des Drehkranzes 2 kann z.B. direkt unterhalb des eigentlichen Drehkranzes 2 liegen, wie in Figur 1 gezeigt. Andere Befestigungsorte der Stelleinrichtung 9 sind möglich und hängen im Wesentlichen von den geometrischen Gegebenheiten und Ausgestaltungen der beiden Fahrgestelle 4, 6 ab.

Figur 1 zeigt beispielhaft zwei verschiedene Schwenkstellungen: Zum einen ist mit gestrichelten Linien eine Horizontalstellung gezeigt, bei der die beiden Laufwerke 5, 7 in einer gemeinsamen Horizontalebene parallel zu der Drehebene des Oberwagens 1 stehen. Die Horizontalstellung entspricht somit einer üblichen Stellung bei Baggern.

Weiterhin zeigt Figur 1 (mit Volllinien) eine Schwenkstellung, bei der das untere Fahrgestell 6 mit Hilfe der Stelleinrichtung 9 in eine Winkelstellung relativ zum dem oberen Fahrgestell 5 verschwenkt ist. Die Schwenkstellung ist deswegen sinnvoll, wenn der Bagger auf einem schrägen Untergrund, zum Beispiel einem Abhang, steht, wie in Fig. 1 gezeigt. Würde das untere Fahrgestell 6 nicht verschwenkbar sein, würde der gesamte Bagger zusammen mit dem Drehkranz 2 und dem Oberwagen 1 schräg stehen, was zum einen die Einsatzfähigkeit des Baggers erheblich einschränken und zum anderen den Fahrkomfort für den Baggerführer beeinträchtigen würde.

Mithilfe des verschwenkbaren unteren Fahrgestells 6 kann jedoch die Schrägstellung des Untergrunds 10 ausgeglichen werden, wie Figur 1 zeigt. Insbesondere kann das obere Fahrgestell 4 mit dem Drehkranz 2 derart ausgerichtet werden, dass der Drehkranz 2 in einer Horizontalebene liegt. Dementsprechend steht auch der Oberwagen 1 in einer Horizontalebene und die Drehachse des Oberwagens 1 bzw. des Drehkranzes 2 ist in Vertikalrichtung ausgerichtet.

Dabei ist es auch vorteilhaft, dass das untere Laufwerk 7 im Wesentlichen parallel zu dem Untergrund 10 steht, also insbesondere die Kette des unteren Laufwerks keinen besonderen Deformationen unterliegt, wie dies zum Beispiel bei der Kette des oberen Laufwerks 5 deutlich erkennbar der Fall ist. Gerade die Kette des unteren Laufwerks 7 ist im Einsatz besonders belastet, weil sich auf ihr ein erheblicher Teil der Last abstützt, und weist dadurch eine nur eingeschränkte Lebensdauer auf. Durch die Parallelstellung zum Untergrund 10 kann jedoch die Belastung vermindert und damit die Lebensdauer erhöht werden.

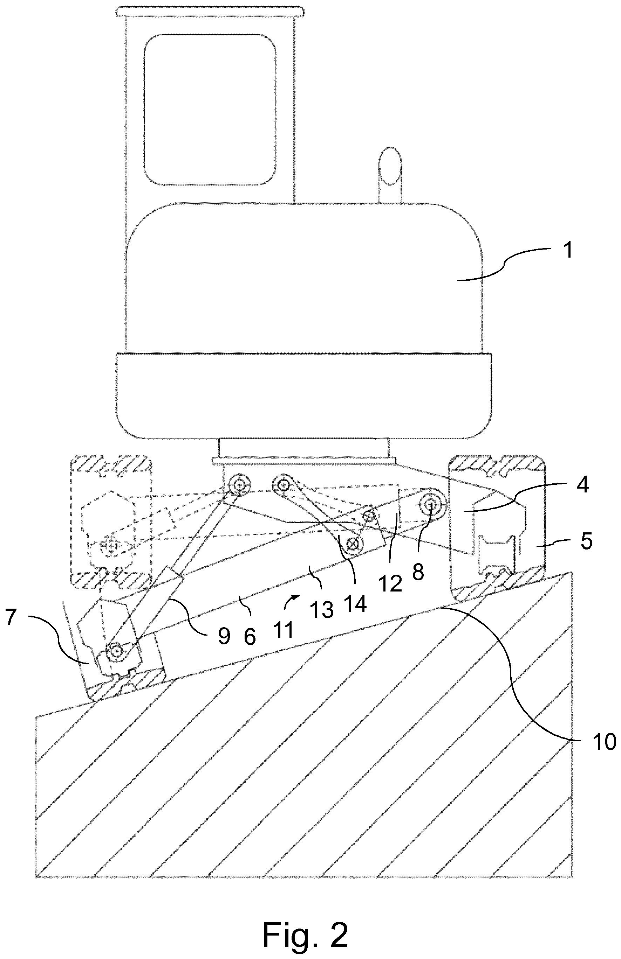

Figur 2 zeigt eine Variante des Baggers von Figur 1 mit einer Telekopiereinrichtung 11.

Die Telekopiereinrichtung 11 dient dazu, den Abstand zwischen dem unteren Laufwerk 7 und der Schwenkachse 8 verändern zu können. Insbesondere soll durch die Teleskopiereinrichtung 11 erreicht werden, dass sich das untere Laufwerk 7 von der Schwenkachse 8 weiter entfernt, je mehr das untere Fahrgestell 6 aus der Horizontalstellung (gestrichelte Linien) verschwenkt wird.

Die Telekopiereinrichtung 11 weist zwei ineinander verschiebbare Holme auf, nämlich einen als oberes Teleskopelement dienenden oberen Holm 12 und einen als unteres Teleskopelement dienenden unteren Holm 13. Die Begriffe sind in Analogie zu den Bezeichnungen der Fahrgestelle und der Laufwerke gewählt und sollen lediglich zum besseren Verständnis dienen. So werden alle Bezeichnungen mit "oberer" auf die hangseitigen Komponenten bezogen, während "untere" auf die talseitigen Komponenten gerichtet ist. Genauso könnten auch Bezeichnungen wie "linksseitig" und "rechtsseitig" oder auch "erste" und "zweite" gewählt werden. Eine Bedeutung dahingehend, dass "obere" auch meint, dass sich die Komponenten auf einem höheren Höhenniveau befinden müssten, besteht nicht.

Die Holme 12, 13 sind relativ zueinander längsverschiebbar und bilden einen Teil des unteren Fahrgestells 6.

Das eine Ende des oberen Holms 12 ist mit der Schwenkachse 8 verschwenkbar gekoppelt. Sein anderes Ende ist in dem unteren Holm 13 linear beweglich geführt. Das untere Ende des unteren Holms 13 trägt wiederum das untere Laufwerk 7.

Die teleskopartige Verschiebebewegung wird durch eine Koppelstange 14 bewirkt, die mit ihren einen Ende an dem oberen Fahrgestell 4 und mit ihrem anderen Ende an dem unteren Fahrgestell 6, hier an dem unterem Holm 13 schwenkbar befestigt ist.

Bei einem Verschwenken des unteren Fahrgestells 6 relativ zu dem oberen Fahrgestell 4 mit Hilfe der Stelleinrichtung 9 zwingt die Koppelstange 14 dem unteren Holm 13 eine Verschiebebewegung relativ zu dem oberen Holm 12 auf. Insbesondere wird der untere Holm 13 weg von der Schwenkachse 8 verschoben, so dass sich der Abstand zwischen dem unterem Laufwerk 7 und der Schwenkachse 8 vergrößert. Dies ist insbesondere auch durch einen Vergleich der Darstellungen in den Figuren 1 und 2 erkennbar. Das untere Laufwerk 7 steht in Figur 2 deutlich weiter links als in Figur 1.

Das Telekopieren bewirkt somit, dass der Abstand zwischen den beiden Laufwerken 5, 7 vergrößert wird. Dadurch wird auch die gesamte Standfläche des Baggers auf dem Untergrund 10 vergrößert, was zu einer verbesserten Standsicherheit führt. Insbesondere kann die Gefahr eines Kippens des Baggers in Talrichtung erheblich vermindert werden.

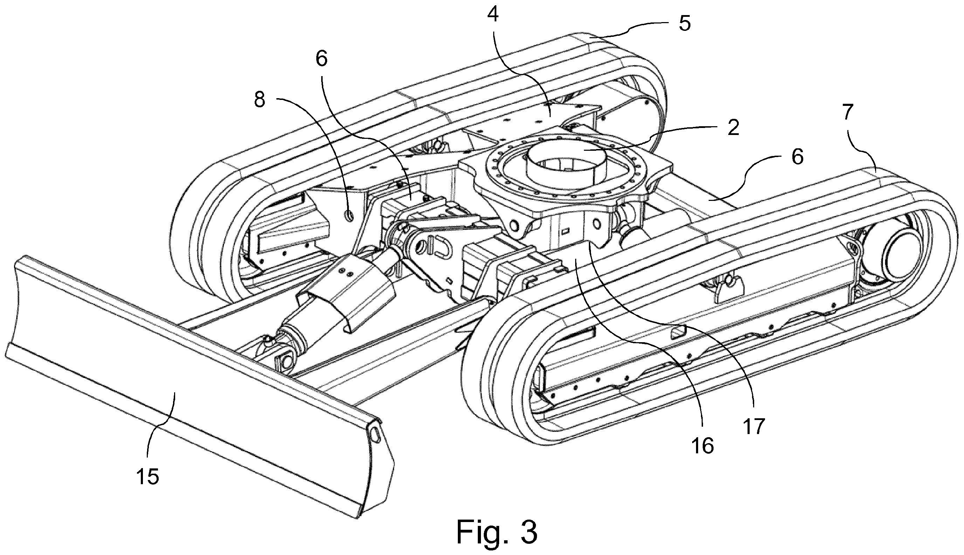

Die Figuren 3 bis 6 zeigen eine andere Ausführungsform, die jedoch die Grundprinzipien der Ausführungsform von Figur 2 übernehmen. Daher werden auch die Bezugszeichen beibehalten. Gezeigt wird in den Figuren jedoch nur der Unterbau mit dem aus den Fahrgestellen 4 und 6 bestehenden Fahrwerk und dem Drehkranz 2.

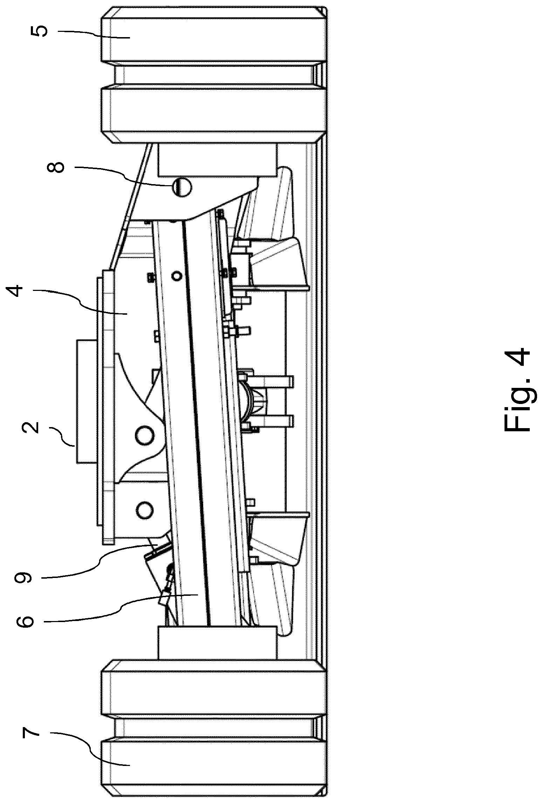

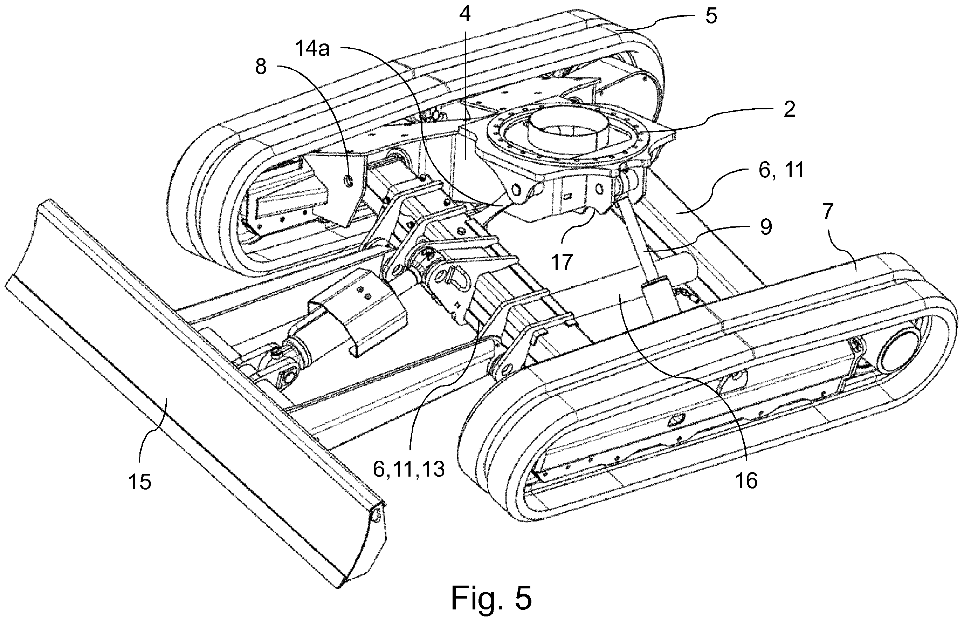

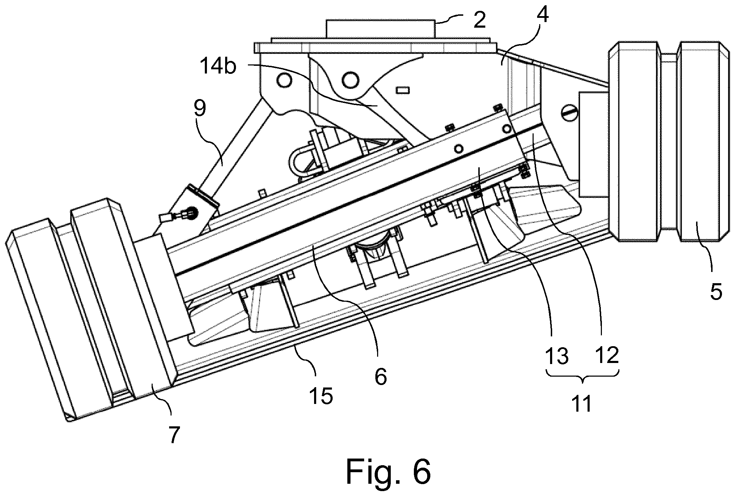

Die Figuren 3 und 4 zeigen dabei insbesondere den Unterbau in Horizontalstellung, während die Figuren 5 und 6 den Unterbau in Schwenkstellung, das heißt mit dem nach unten verschwenkten unteren Fahrgestell 6 zeigen.

Bei der gezeigten Ausführungsform sind zwei Koppelstangen 14, nämlich eine vordere Koppelstange 14a (Figur 5) und eine hintere Koppelstange 14b (Figur 6) vorgesehen.

An dem vorderen Teil des unteren Fahrgestells 6 ist ein Planierschild 15 befestigt. Wie insbesondere den Figuren 5 und 6 entnehmbar, verschwenkt das Planierschild 15 zusammen mit dem unteren Fahrgestell 6 und passt sich damit gut an den schrägen Untergrund 10 an.

Das untere Fahrgestell 6 weist die Teleskopiereinrichtung 11 auf. Insbesondere werden dazu in Fahrtrichtung gesehen vor und hinter dem Drehkranz 2 Verbindungsholme (Holme 12, 13) vorgesehen, die die Möglichkeit zur Längenänderung aufweisen. Die Verbindungsholme sind durch eine sich in Fahrtrichtung erstreckende Holmquerverbindung 16 miteinander verbunden, um die Stabilität des unteren Fahrgestells 6 zu vergrößern. Darüber hinaus stellt die Holmquerverbindung 16 einen Anschlag dar, der mit einem an dem oberen Fahrgestell 4 ausgebildeten Abschlag 17 korrespondiert. Wenn das untere Fahrgestell 6 in Horizontalstellung steht (Figur 3) liegt der Anschlag 17 auf der Holmquerverbindung 16 auf, so dass die Horizontalstellung für den normalen Baggerbetrieb zusätzlich formschlüssig stabilisiert ist.

Das Planierschild 15 ist an dem unteren Holm 13 befestigt.

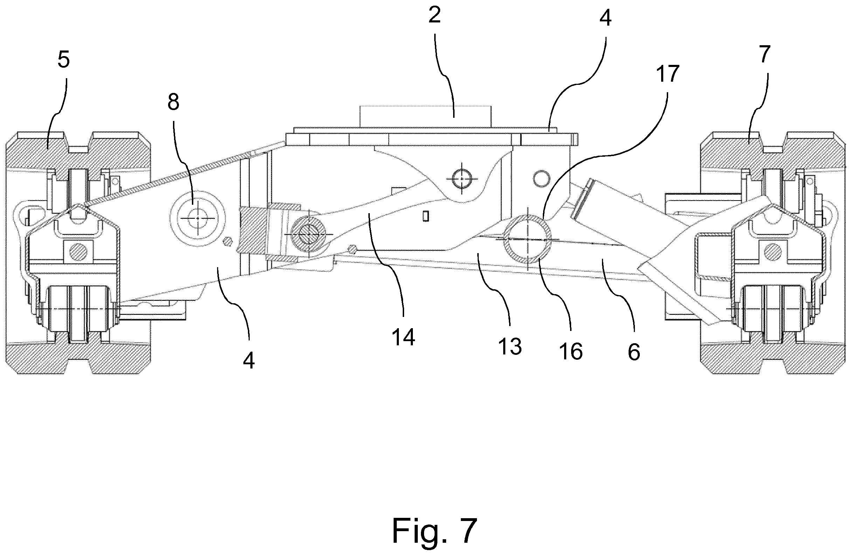

Die Figur 7 zeigt die Wirkung des Anschlags 17 in einer Schnittdarstellung. Deutlich erkennbar ist, dass sich der teilkreisförmige Anschlag 17 um die rohrfömige Holmquerverbindung 16 schmiegt, um einen ausreichenden Formschluss zu gewähren.

Die Verbindungsholme, also der obere Holm 12 und der untere Holm 13 sind auch geeignet, um Schlauch-und Rohrleitungen geschützt zu führen, zum Beispiel die Versorgungsleitungen für den Fahrantriebsmotor für das untere Laufwerk 7.

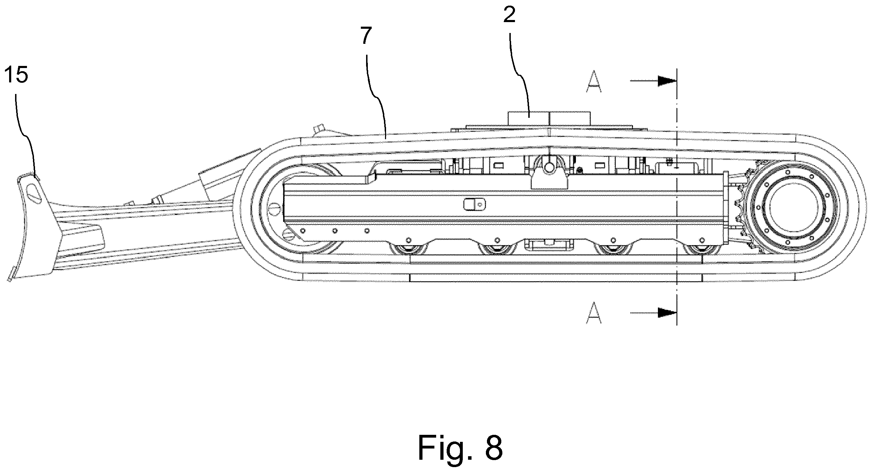

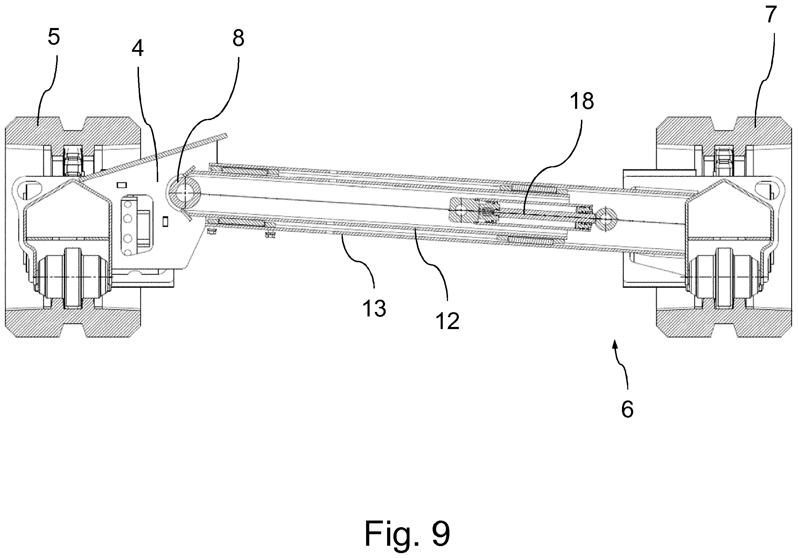

Die Figuren 8 und 9 zeigen eine Variante der Teleskopiereinrichtung 11, wobei in Figur 9 ein Schnitt entlang der Linie A-A von Figur 8 dargestellt ist.

Demnach ist im Inneren der ineinander geführten Holme 12, 13 eine Teleskop-Stelleinrichtung 18 vorgesehen. Im vorliegenden Fall handelt es sich dabei um eine Kolben-Zylinder-Einheit, die hydraulisch betrieben wird. Alternativ wäre auch eine andere Linearverstellung, z.B. ein elektrischer Stellantrieb u. ä. möglich.

Mit Hilfe der Teleskop-Stelleinrichtung, die ebenfalls zu der Teleskopiereinrichtung 11 gehört, ist es möglich, den unteren Holm 13 relativ zu dem oberen Holm 12 linear zu verschieben. Auf diese Weise kann der Abstand zwischen dem unteren Laufwerk 7 und der Schwenkachse 8 und damit der Abstand zwischen den beiden Laufwerken 5, 7 unabhängig von der Schwenkstellung des unteren Fahrgestells 6 verändert werden. Während bei der Ausführungsform von Figur 2 die lineare Verschiebung des unteren Holms 13 relativ zu dem oberen Holm 12 aufgrund der Koppelwirkung der Koppelstange 14 von der Winkelstellung des unteren Fahrgestells 6 abhängt, ist bei der Ausführungsform der Figuren 8 und 9 eine Winkelstellung nicht erforderlich. Vielmehr kann sogar in der Horizontalstellung, also in der unverschwenkten Stellung des unteren Fahrgestells 6 der Abstand zwischen den beiden Laufwerken 5, 7 beliebig aufgrund des Fahrerwunsches eingestellt werden.

Zur Betätigung der jeweiligen Stelleinrichtungen, insbesondere also zum Verschwenken des unteren Fahrgestelles 6 und zum Einstellen der Teleskopiereinrichtung 11 können geeignete Bedienelemente vorgesehen sein, über die der Fahrer seine Wünsche vorgeben kann.

## Patentansprüche

1. Baufahrzeug, mit
- einem Drehkranz (2), auf dem ein Oberwagen (1) drehbar gelagert ist; und mit
- einem den Drehkranz (2) tragenden Fahrwerk; wobei
- das Fahrwerk ein mit dem Drehkranz (2) starr verbundenes oberes Fahrgestell (4) mit einem oberen Laufwerk (5) aufweist;
- das Fahrwerk ein relativ zu dem oberen Fahrgestell (4) verschwenkbar gelagertes unteres Fahrgestell (6) mit einem unteren Laufwerk (7) aufweist; und wobei
- eine Schwenkvorrichtung (9) vorgesehen ist, zum Verschwenken des unteren Fahrgestells (6) relativ zu dem oberen Fahrgestell (4) um wenigstens eine sich in Fahrtrichtung erstreckende Schwenkachse (8).

2. Baufahrzeug nach Anspruch 1, wobei die wenigstens eine Schwenkachse (8)
- zwischen dem oberen Fahrgestell (4) und dem unteren Fahrgestell (6) ausgebildet ist, um die das untere Fahrgestell (6) relativ zu dem oberen Fahrgestell (4) verschwenkbar ist; und wobei
- die Schwenkvorrichtung eine hydraulische und/oder elektrische Stelleinrichtung (9) aufweist.

3. Baufahrzeug nach Anspruch 1 oder 2, wobei an dem unteren Fahrgestell ein Planierschild (15) befestigt ist.

4. Baufahrzeug nach einem der vorstehenden Ansprüche, wobei das untere Laufwerk (7) relativ zu der Schwenkachse (8) linear bewegbar ist.

5. Baufahrzeug nach einem der vorstehenden Ansprüche, wobei
- das untere Fahrgestell (6) eine Teleskopiereinrichtung (11) aufweist; und wobei
- die Teleskopiereinrichtung (11) derart ausgebildet ist, um einen Abstand zwischen dem unteren Laufwerk (7) und der Schwenkachse (8) zu verändern.

6. Baufahrzeug nach einem der vorstehenden Ansprüche, wobei zwischen dem oberen Fahrgestell (4) und dem unteren Fahrgestell (6) eine Koppeleinrichtung (14) vorgesehen ist, zum automatischen Verändern des Abstands zwischen dem unteren Laufwerk (7) und der Schwenkachse (8), wenn das untere Fahrgestell (6) relativ zu dem oberen Fahrgestell (4) verschwenkt wird.

7. Baufahrzeug nach Anspruch 6, wobei die Koppeleinrichtung eine Koppelstange (14) aufweist, die mit ihrem einen Ende an dem oberen Fahrgestell (4) und mit ihrem anderen Ende an dem unteren Fahrgestell (6) schwenkbar befestigt ist.

8. Baufahrzeug nach Anspruch 5 oder nach Anspruch 5 und einem der Ansprüche 6 oder 7, wobei
- die Teleskopiereinrichtung (11) ein mit der Schwenkachse (8) gekoppeltes und um die Schwenkachse (8) verschwenkbares oberes Teleskopelement (12) sowie ein mit dem unteren Laufwerk (7) starr gekoppeltes unteres Teleskopelement (13) aufweist; und wobei
- die Teleskopelemente (12, 13) ineinander geführt und relativ zueinander linear bewegbar sind.

9. Baufahrzeug nach Anspruch 7 oder 8, wobei das andere Ende der Koppelstange (14) an dem unteren Teleskopelement (13) schwenkbar befestigt ist.

10. Baufahrzeug nach Anspruch 8 oder 9, wobei die Teleskopiereinrichtung (11) eine Teleskop-Stelleinrichtung (18) zum Verändern einer Relativstellung der beiden Teleskopelemente (12, 13) zueinander aufweist.

11. Baufahrzeug nach Anspruch 10, wobei die Teleskop-Stelleinrichtung (18) im Inneren von wenigstens einem der Teleskopelemente (12, 13) angeordnet ist.

12. Baufahrzeug nach einem der vorstehenden Ansprüche, wobei zwischen dem unteren Fahrgestell (6) und dem oberen Fahrgestell (4) ein Anschlag (16, 17) vorgesehen ist, zum Definieren eines waagerechten Betriebszustandes, in dem die Fahrgestelle (4, 6) eine Relativstellung einnehmen, bei dem die Laufwerke (5, 7) in einer gemeinsamen Horizontalebene stehen.

## Claims

1. Construction vehicle, having
- a slewing ring (2), on which a superstructure (1) is rotatably mounted; and having
- a running gear unit which supports the slewing ring (2); wherein
- the running gear unit has an upper chassis (4) which is rigidly connected to the slewing ring (2) and has an upper travelling gear (5);
- the running gear unit has a lower chassis (6) which is mounted so as to be pivotable relative to the upper chassis (4) and has a lower travelling gear (7); and wherein
- a pivoting apparatus (9) is provided for pivoting the lower chassis (6) relative to the upper chassis (4) about at least one pivot axle (8) which extends in the travel direction.

2. Construction vehicle as claimed in claim 1, wherein the at least one pivot axle (8)
- is formed between the upper chassis (4) and the lower chassis (6), about which pivot axle the lower chassis (6) is pivotable relative to the upper chassis (4); and wherein
- the pivoting apparatus has a hydraulic and/or electrical actuating device (9).

3. Construction vehicle as claimed in claim 1 or 2, wherein a dozer blade (15) is fastened to the lower chassis.

4. Construction vehicle as claimed in any one of the preceding claims, wherein the lower travelling gear (7) is movable linearly relative to the pivot axle (8).

5. Construction vehicle as claimed in any one of the preceding claims, wherein
- the lower chassis (6) has a telescoping device (11); and wherein
- the telescoping device (11) is configured so as to change a distance between the lower travelling gear (7) and the pivot axle (8).

6. Construction vehicle as claimed in any one of the preceding claims, wherein a coupling device (14) is provided between the upper chassis (4) and the lower chassis (6) in order to automatically change the distance between the lower travelling gear (7) and the pivot axle (8) when the lower chassis (6) is pivoted relative to the upper chassis (4).

7. Construction vehicle as claimed in claim 6, wherein the coupling device has a coupling rod (14), one end of which is pivotably fastened to the upper chassis (4) and the other end of which is pivotably fastened to the lower chassis (6).

8. Construction vehicle as claimed in claim 5 or as claimed in claim 5 and any one of claims 6 or 7, wherein
- the telescoping device has (11) an upper telescopic element (12) which is coupled to the pivot axle (8) and is pivotable about the pivot axle (8), and a lower telescopic element (13) which is rigidly coupled to the lower travelling gear (7); and wherein
- the telescopic elements (12, 13) are guided one inside the other and are movable linearly relative to one another.

9. Construction vehicle as claimed in claim 7 or 8, wherein the other end of the coupling rod (14) is pivotably fastened to the lower telescopic element (13).

10. Construction vehicle as claimed in claim 8 or 9, wherein the telescoping device (11) has a telescope actuating device (18) for changing the relative position of the two telescopic elements (12, 13) with respect to one another.

11. Construction vehicle as claimed in claim 10, wherein the telescope actuating device (18) is arranged in the interior of at least one of the telescopic elements (12, 13).

12. Construction vehicle as claimed in any one of the preceding claims, wherein a stop (16, 17) is provided between the lower chassis (6) and the upper chassis (4) in order to define a horizontal operating state, in which the chassis (4, 6) take up a relative position, in which the travelling gears (5, 7) are located in a common horizontal plane.

## Revendications

1. Véhicule de chantier avec
- une couronne rotative (2), sur laquelle un chariot supérieur (1) est logé de manière rotative ; et avec
- un châssis supportant la couronne rotative (2) ; dans lequel
- le châssis comprend un châssis supérieur (4), relié de manière rigide avec la couronne rotative (2), avec un train de roulement supérieur (5) ;
- le châssis comprend un châssis inférieur (6), logé de manière pivotante par rapport au châssis supérieur (4), avec un train de roulement inférieur (7) ; et dans lequel
- un dispositif de pivotement (9) est prévu, pour le pivotement du châssis inférieur (6) par rapport au châssis supérieur (4) autour d'au moins un axe de pivotement (8) s'étendant dans la direction de la marche.

2. Véhicule de chantier selon la revendication 1, dans lequel l'au moins un axe de pivotement (8)
- est réalisé entre le châssis supérieur (4) et le châssis inférieur (6), autour desquels le châssis inférieur (6) peut pivoter par rapport au châssis supérieur (4) ; et dans lequel
- le dispositif de pivotement (9) comprend un dispositif de réglage hydraulique et/ou électrique.

3. Véhicule de chantier selon la revendication 1 ou 2, dans lequel, au châssis inférieur est fixé une lame niveleuse (15).

4. Véhicule de chantier selon l'une des revendications précédentes, dans lequel le train de roulement inférieur (7) est mobile linéairement par rapport à l'axe de pivotement (8).

5. Véhicule de chantier selon l'une des revendications précédentes, dans lequel
- le châssis inférieur (6) comprend un dispositif télescopique (11) ; et dans lequel
- le dispositif télescopique (11) est conçu pour modifier une distance entre le train de roulement inférieur (7) et l'axe de pivotement (8).

6. Véhicule de chantier selon l'une des revendications précédentes, dans lequel, entre le châssis supérieur (4) et le châssis inférieur (6) est prévu un dispositif de couplage (14) pour la modification automatique de la distance entre le train de roulement inférieur (7) et l'axe de pivotement (8), lorsque le châssis inférieur (6) est pivoté par rapport au châssis supérieur (4).

7. Véhicule de chantier selon la revendication 6, dans lequel le dispositif de couplage comprend une tige de couplage (14) qui est fixée de manière pivotante avec une extrémité au châssis supérieur (4) et avec son autre extrémité au châssis inférieur (6).

8. Véhicule de chantier selon la revendication 5 ou selon la revendication 5 et une des revendications 6 ou 7, dans lequel
- le dispositif télescopique (11) comprend un élément télescopique supérieur (12) couplé avec l'axe de pivotement (8) et pivotant autour de l'axe de pivotement (8) ainsi qu'un élément télescopique inférieur (13) couplé de manière rigide avec le train de roulement inférieur (7) ; et dans lequel
- les éléments télescopiques (12, 13) sont guidés l'un dans l'autre et sont mobiles linéairement l'un par rapport à l'autre.

9. Véhicule de chantier selon la revendication 7 ou 8, dans lequel l'autre extrémité de la tige de couplage (14) est fixée de manière pivotante à l'élément télescopique inférieur (13).

10. Véhicule de chantier selon la revendication 8 ou 9, dans lequel le dispositif télescopique (11) comprend un dispositif de réglage télescopique (18) pour la modification d'une position relative des deux éléments télescopiques (12, 13) entre eux.

11. Véhicule de chantier selon la revendication 10, dans lequel le dispositif de réglage télescopique (18) est disposé à l'intérieur d'au moins un des éléments télescopiques (12, 13).

12. Véhicule de chantier selon l'une des revendications précédentes, dans lequel, entre le châssis inférieur (6) et le châssis supérieur (4), est prévue une butée (16, 17) pour la définition d'un état de fonctionnement horizontal, dans lequel les châssis (4, 6) adoptent une position relative dans laquelle les trains de roulement (5, 7) se trouvent dans un même plan horizontal.
